# EUROPÄISCHE PATENTSCHRIFT

(11) **EP 1 505 921 B1**
(45) Veröffentlichungstag und Bekanntmachung des Hinweises auf die Patenterteilung: **04.04.2007**
(21) Anmeldenummer: 03752759.5
(22) Anmeldetag: 16.05.2003
(51) Int. Cl.: A61C 7/14, A61C 19/04

(54) **KIEFERORTHOPÄDISCHES BRACKET UND FESTSITZENDE KIEFERORTHOPÄDISCHE APPARATUR**
ORTHODONTIC BRACKET AND TIGHT-FITTING ORTHODONTIC APPLIANCE
VERROU ORTHODONTIQUE ET APPAREILLAGE ORTHODONTIQUE FIXE

(30) Priorität: 17.05.2002 DE 10222087
(43) Veröffentlichungstag der Anmeldung: 16.02.2005
(73) Patentinhaber: Albert-Ludwigs-Universität Freiburg, 79104 Freiburg (DE)
(72) Erfinder: Paul, Oliver, 79280 Aud (DE); Lapatki, Bernd, 79102 Freiburg (DE)
(74) Vertreter: Müller-Boré & Partner Patentanwälte
(86) Internationale Anmeldenummer: PCT/EP2003/005197
(87) Internationale Veröffentlichungsnummer: WO 2003/096922

(56) Entgegenhaltungen:
- DE-A- 19 961 865
- US-A- 5 791 350
- YOSHIAKI YAMADA ET AL: "AN APPLICATION OF MAGNET AND MAGNETIC SENSOR: MEASUREMENT SYSTEM FOR TOOTH MOVEMENT" IEEE TRANSACTIONS ON BIOMEDICAL ENGINEERING, IEEE INC. NEW YORK, US, Bd. 37, Nr. 10, 1. Oktober 1990 (1990-10-01), Seiten 919-924, XP000171796 ISSN: 0018-9294
- BOURAUEL C ET AL: "KRAFT-MOMENTEN-AUFNEHMER FUER DIE KIEFERORTHOPAEDIE" FEINWERKTECHNIK + MESSTECHNIK, CARL HANSER VERLAG. MUNCHEN., DE, Bd. 98, Nr. 10, 1. Oktober 1990 (1990-10-01), Seiten 419-422, XP000165963

## Beschreibung

Die vorliegende Erfindung betrifft ein kieferorthopädisches Bracket bzw. Ankerglied zur Verankerung einer festsitzenden kieferorthopädischen Apparatur an einem Zahn, bevorzugt zur Verankerung eines orthodontisch wirksamen Bogens sowie eine entsprechende festsitzende kieferorthopädische Apparatur.

Festsitzende kieferorthopädische Apparaturen sind bekannt, um einzelne Zähne bzw. Zahnsegmente in allen Dimensionen des Raumes-relativ zueinander zu bewegen bzw. ihre Stellung zu kontrollieren. Hauptbestandteil der festsitzenden kieferorthopädischen Apparaturen (sogenannte "feste Zahnspangen") sind Brackets bzw. Verankerungsglieder für einen Bogen, welche an den einzelnen Zähnen festgeklebt bzw. über Bänder fest zementiert werden. Die Brackets dienen als eine Art Haltegriff und erlauben die Übertragung von Kräften und Drehmomenten auf die einzelnen Zähne bevorzugt in allen Raumrichtungen. Die zur Bewegung und Kontrolle der Zähne notwendigen Kräfte und Drehmomente werden normalerweise über einen Bogen, z.B. einem bogenförmigen Metalldraht von rundem oder vierkantigem Querschnitt, auf die Brackets aufgebracht, in dem der Bogen in eine Führungsrille (dem sogenannten "slot") im Bracket eingeführt wird.

Um eine effizientere Bewegung der Zähne zu erzielen, kommt es darauf an, das die auf die Zähne wirkenden Kräfte, Drücke und Drehmomente richtig dimensioniert sind und eine über den Behandlungszeitraum gesehen, kontinuierliche Wirkung entfalten können. Die auftretenden Kräfte und/oder Drehmomente werden häufig anhand von Druck- und Schmerzempfindungen des Patienten und/oder anhand des Empfindens des Behandlers, d.h. subjektiv eingeschätzt, so daß die tatsächlich angewendeten Kräfte von Behandler zu Behandler, insbesondere unabhängig von deren Erfahrung stark variieren.

Um eine objektivere Erfassung der Kräfte zu erzielen, schlägt US-A-5791350 ein Kraftmeßinstrument vor, in dem eine Sonde über einen Schlitz an den Bogen gekoppelt wird und eine entsprechende Messung der an dieser Stelle wirkenden Kräfte vornimmt. Diese Vorrichtung hat sich jedoch als dahingehend nachteilhaft erwiesen, daß es nicht eindeutig möglich ist, aus den am Bogen gemessenen Kräften Rückschlüsse auf die tatsächlich wirkenden Kräfte eindeutig zu ziehen, wobei eine Beeinflussung des Kräftesystems aufgrund der angekoppelten Sonde nicht ausgeschlossen werden konnten.

Die DE 199 61 865 A offenbart eine Einrichtung zur Tragekontrolle eines medizinischen Heilmittels, wie eine Zahnspange, welches einen Kontrollchip aufweist, der einen Fühler enthält, welcher auf eine bei Tragebedingungen herrschende Umgebungsgröße (beispielsweise der Temperatur) anspricht.

Die US-5,791,350 offenbart eine Vorrichtung und ein Verfahren zum Messen einer Kraft in einem System, welches die Kraft des Systems an einen Sensorstab übermittelt, der an einem Fühler angeordnet ist.

Es ist daher Aufgabe der vorliegenden Erfindung eine zuverlässige Ermittlung der auf einzelne Zähne wirkende Kräfte, Drücken und/oder Drehmomente zu ermitteln, um diese für den kieferorthopädischen Zweck geeignet einzustellen und/oder zu verstellen, um sie dann insbesondere für den kieferorthopädischen Zweck geeignet einstellen und/oder verstellen zu können.

Diese Aufgabe wird erfindungsgemäß durch einen kieferorthopädisches Bracket gemäß Anspruch 1 gelöst. Bevorzugte Ausführungsformen der Erfindung sind Gegenstand der abhängigen Unteransprüche.

Gemäß der Erfindung wird ein kieferorthopädisches Bracket bzw. Verankerungsglied zur Verankerung einer festsitzenden kieferorthopädischen Apparatur an einem Zahn bereitgestellt mit einer an einem Zahn zu verankernden, bevorzugt zu verklebenden bzw. zu zementierenden Bracketbasis und einer Bracketbefestigung bzw. -schloß zur Befestigung einer Kraft-, Druck- und/oder Drehmomentsaufbringungseinrichtung, bevorzugt eines Bogens bzw. Segmentbogens, wobei zumindest eine Sensoreinrichtung zwischen der Bracketbasis und der Bracketbefestigung bzw. Bracketschloß zur Messung einer von der Bracketbefestigung bzw. Bracketschloß auf die Bracketbasis übertragene Kraft, eines übertragenen Drucks und/oder eines übertragenen Drehmoments vorgesehen ist. Daher können die auf die Zähne angewendeten Kräfte, Drücke und/oder Drehmomente objektiv erfaßt bzw. detektiert bzw. gemessen werden. Folglich kann eine effiziente und möglichst atraumatisch verlaufende Zahnbewegung erzielt werden, insbesondere indem die Applikation übermäßig großer Kräfte vermieden werden kann. Des weiteren, ist eine dreidimensionale Erfassung dieser Meßwerte möglich, so daß die Kräfte, Drücke und/oder Drehmomente gezielt auf den Zahn angewendet und verifiziert werden können. Des weiteren können die gemessenen bzw. erfaßten Kräfte, Drücke und/oder Drehmomente in Abhängigkeit von der Zeit erfaßt werden, so daß die zeitliche Veränderung der Meßwerte zwischen den Nachjustierungen der kieferorthopädischen Apparatur durch den Kieferorthopäden ermittelt werden können. Dies ist dahingehend von Vorteil, daß unmittelbar nach einer Nachjustierung maximale Kräfte und Drehmomente auf die Zähne des Patienten wirken, welche sich durch den progressiven Umbau dies Kieferknochens und der sich daraus ergebenden Verschiebung/Drehung der Zähne langsam (näherungsweise exponentiell) abbauen. Mit der Information über die (zeitliche) Veränderung der Meßwerte ist es möglich, die maximale Häufigkeit der notwendigen Nachjustierungen abzuleiten und somit die Behandlungseffizienzrzu steigern. Weiterhin sind aus dem Abklingen der Kräfte und der erreichten Verschiebung/Drehungen Aufschlüsse über die von Patient zu Patient verschiedenen Werte der Nachgiebigkeit, Anpassungsfähigkeit und/oder Plastizität des Kieferknochengerüsts bzw. -gewebes zu gewinnen, welche idealerweise auch in den Behandlungsplan einbezogen werden können. Des weiteren können die Informationen über die plastische Eigenschaften des Kiefers, d.h. dessen effektiver Viskosität, gewonnen werden, die für eine realistische dreidimensionale, zeitaufgelöste numerische Simulation der mechanischen Spannungen in dem mechanischen System aus Kiefer, Zähnen und kieferorthopädischer Apparatur vorteilhafterweise verwendet werden können.

Dementsprechend ermöglicht das erfindungsgemäße kieferorthopädische Bracket dem Kieferorthopäden, ein quantitatives Feedback über die in der kieferorthopädischen Apparatur, insbesondere im Multiband-/Multibracketsystem wirkenden Kräfte, Drücke und/oder Drehmomente zu erhalten. Es ist somit möglich, eine feinere, optimale Einstellung der Meßgrößen vorzunehmen. Darüber hinaus wird der Kieferorthopäde in die Lage versetzt, die von ihm eingestellten Kräfte, Drücke und/oder Drehmomente an den einzelnen Patienten anzupassen, z.B. um eine Reduzierung der Kräfte bei vorgeschädigtem Zahnhalteapparat vorzunehmen. Darüber hinaus kann die Kraftabnahme bzw. Deaktivierung der kieferorthopädischen Apparatur im Zuge der Zahnbewegung bzw. -drehung insbesondere von Sitzung zu Sitzung überwacht werden; dementsprechend ermöglicht das erfindungsgemäße kieferorthopädische Bracket vorteilhafterweise, den optimalen Zeitpunkt der Nachaktivierung besser abzuschätzen, was auch zu einer Verminderung der Behandlungszeit und somit der Behandlungskosten führt.

Gemäß einer bevorzugten Ausführungsform der vorliegenden Erfindung detektiert bzw. erfaßt die Sensoreinrichtung die übertragene Kraft, den übertragenen Druck und/oder den übertragenen Drehmoment mittels eines durch die Kraft, den Druck bzw. das Drehmoment erzeugten elektromechanischen, kapazitiven, piezoresistiven, piezoelektrischen, magnetostriktiven, magnetoelastischen und/oder Hall-Effekts, mittels eines Dünnfilmsensors, eines Dicvkschichtsensors, eines Festkörpersensors und/oder mittels eines Dehnmeßstreifens. Mittels dieser Detektionsarten ist es vorteilhaft möglich, die auf den Zahn wirkenden Kräfte, Drücke und/oder Drehmomente genau zu erfassen. Gemäß einer weiteren bevorzugten Ausführungsform der vorliegenden Erfindung weist die Sensoreinrichtung eine kapazitive Sensoreinheit auf, auf welche die Kraft, der Druck und/oder das Drehmoment übertragen wird. Die dadurch verursachte mechanische Verformung der kapazitiven Sensoreinheit wird elektrisch ausgelesen. Mittels dieser Detektionsarten ist es vorteilhaft möglich, die auf den Zahn wirkenden Kräfte, Drücke und/oder Drehmomente genau zu erfassen.

Bevorzugt weist die Sensoreinrichtung eine Halbleitereinrichtung, bevorzugt mit einem Substrat aus im wesentlichen monokristallinen Silizium, in der zumindest eine Sensoreinheit, bevorzugt als diffundierte(r) Widerstand bzw. Widerstände und/oder als Dünnschichtwiderstände aus Polysilizium oder Metalldünnschichten, integriert ist. Alternativ bevorzugt enthält die Sensoreinheit auf mechanische Spannungen empfindliche Halbleiterdioden, Bipolar- und/oder Feldeffekt-Transistoren. Sensoreinheiten dieser Art werden bevorzugt mit den Methoden der Halbleitertechnologie, d.h. Dotierung, Dünnschichtwachstum- bzw. abscheidung, Photolithographie, Strukturierung und thermischen Prozessen hergestellt. In einer weiteren bevorzugten Ausführungsform weist die Sensoreinrichtung zumindest eine mit den Methoden der Mikromechanik gefertigte Sensoreinheit auf, welche eine höhere Empfindlichkeit gegenüber Kräften, Drücken und/oder Drehmomenten aufweisen kann, oder welche die selektive Messung einer oder mehrerer Komponenten der Kräfte;' Drücke und/oder Drehmomente ermöglicht. Die Methoden der Mikromechanik umfassen bevorzugt selektive Halbleiter- und Dünnschichtätztechniken, Opferschichttechnik, sowie Techniken der Aufbau- und Verbindungstechnik. Aufgrund der Integration in einer Halbleitereinrichtung ist es möglich, eine Sensoreinrichtung vorzusehen, die den kleinen Dimensionen eines kieferorthopädischen Brackets gerecht wird und eine hohe Detektions- bzw. Meßgenauigkeit zuläßt. Durch Vorsehen mehrerer Sensoreinheiten ist es möglich, die gleiche Meßgröße mehrfach zu detektieren und einen (gegebenenfalls gewichteten) Mittelwert zu bilden. Des weiteren ist durch das Vorsehen unterschiedlicher Sensoreinheiten und/oder durch Analyse der Gesamtmenge der Meßsignale mehrerer unterschiedlicher oder auch gleicher Sensoreinheiten das Erfassen von unterschiedlichen Meßgrößen, wie Kraft, Druck und/oder Drehmoment, sowie weiterer Meßgrößen, wie die Temperatur möglich.

Weiterhin bevorzugt, weist die Halbleitereinrichtung eine darin integrierte Schaltung auf, die mit der Sensoreinheit signalverbunden ist und ein Signal der Sensoreinheit bzw. ein durch die Sensoreinheit generiertes Signal verarbeitet, bevorzugt verstärkt und/oder auswertet. Dementsprechend ist eine Signalaufbereitung der von der Sensoreinheit generierten Signale vorteilhaft möglich, und zwar in unmittelbarer geometrischer Nähe zu der Sensoreinheit.

Am bevorzugtesten ist ein durch die Sensoreinrichtung erzeugtes Signal über eine Kontakteinrichtung von außen, d.h. von der Außenseite des Brackets ablesbar. Dementsprechend können die Signale bevorzugt von außen z.B. mittels eines orthodontischen Spezialinstruments abgelesen werden, die ihrerseits mit elektrischen Leitungen und Gegenkontakten versehen ist, die mit der Kontakteinrichtung des kieferorthopädischen Brackets in Signalverbindung gebracht werden können. Die Signalverbindung kann ebenfalls bevorzugt durch kapazitive und/oder induktive Ankoppelung des Spezialinstruments erfolgen.

Gemäß einer weiteren bevorzugten Ausführungsform der vorliegenden Erfindung ist die Sensoreinrichtung mit der Bracketbasis und/oder der Bracketbefestigung über eine Klebeschicht befestigt bzw. gekoppelt. Somit ist eine Übertragung von Kräften, insbesondere von Scherkräften und/oder kompressiven Kräften, von der Bracketbefestigung zu der Bracketbasis über die Sensoreinrichtung vorteilhaft gewährleistet.

Bevorzugt definiert bzw. definieren die Bracketbasis und/oder die Bracketbefestigung eine Ausnehmung, in der die Sensoreinrichtung aufgenommen ist, wobei Sensoreinrichtung bevorzugt in der Ausnehmung eingekapselt bzw. abgedichtet ist. Dementsprechend, ist es vorteilhaft möglich, den Sensor derart unterzubringen, daß er durch mechanische und chemische Außeneinwirkung nicht ohne weiteres beschädigt werden kann und ist bevorzugt von Speichel, Speisen, Flüssigkeiten usw. durch die Einkapselung bzw. Abdichtung nach außen hin getrennt.

Bevorzugt weist die Bracketbasis zur Befestigung an dem Zahn eine strukturierte (z.B. aufgerauhte) Fläche auf. Dementsprechend ist es vorteilhaft möglich, eine gute Retention der Bracketbasis an dem Zahn, insbesondere mittels einer entsprechenden Verklebung bzw. Zementierung zu erzielen.

Weiterhin bevorzugt weist die Bracketbefestigung bzw. das Bracketschloß zumindest eine Nut bzw. einen Schlitz bzw. Slot auf, in der ein Bogen als Kraft-, Druck- und/oder Drehmomentaufbringungseinrichtung einer festsitzenden kieferorthopädischen Apparatur einführbar ist, um eine Kraft, einen Druck und/oder einen Drehmoment auf den Zahn zu übertragen.

Es ist weiterhin bevorzugt, daß die Bracketbefestigung eine Befestigungseinrichtung zum Befestigen eines Bandes, bevorzugt eines Gummizuges, einer intermaxillären Verbindungseinheit und/oder eines Gesichtbogens bzw. eines Headgears als Kraft-, Druck- und/oder Drehmomentaufbringungseinrichtung einer festsitzenden kieferorthopädischen Apparatur aufweist, um eine Kraft, eine Druck und/oder ein Drehmoment auf den Zahn übertragen zu können. Aufgrund der unmittelbaren Befestigung des Bandes bzw. Gesichtbogens an dem Bracket, können die wirkenden Kräfte, Drücke und/oder Drehmomente *in situ* quantitativ und bevorzugt online gemessen werden.

Am bevorzugtesten ist ein Temperatursensor zur Messung der Temperatur, bevorzugt in die Sensoreinrichtung integriert, vorgesehen. Der Temperatursensor weist bevorzugt integrierte Dioden, Transistoren und/oder temperaturabhängige Widerstände auf. Aufgrund der möglichen Temperaturmessung, ist vorteilhaft eine Temperaturkompensation möglich, die eine noch bessere Bestimmung der tatsächlich wirkenden Kräfte, Drücke und/oder Drehmomente ermöglicht.

Gemäß der vorliegenden Erfindung wird weiterhin eine festsitzende kieferorthopädische Apparatur zur festen Anbringung an Zähnen bereitgestellt, welche eine Vielzahl von an Zähnen anzubringender Brackets aufweist, auf die mittels einer Aufbringeinrichtung eine Kraft, ein Druck und/oder ein Drehmoment aufgebracht werden soll, wobei zumindest ein Bracket gemäß der Erfindung oder einer bevorzugten Ausführungsform hiervon ausgebildet ist.

Gemäß einer bevorzugten Ausführungsform der Erfindung ist ein Bogen als Kraft-, Druck- und/oder Drehmomentaufbringungseinrichtung vorgesehen.

Gemäß einem nicht erfindungsgemäßen Aspekt wird weiterhin eine abnehmbare kieferorthopädische Apparatur vorgeschlagen zur abnehnbaren Anbringung bzw. temporären Befestigung an zumindest einen Zahn bzw. einem Kiefer, mit einem aktiven Element zum Aufbringen bzw. Beaufschlagen bzw. Einwirken einer Kraft, eines Drucks und/oder eines Drehmoments auf zumindest einen Zahn, wobei zumindest eine Sensoreinrichtung zur Messung einer auf den Zahn übertragenen Kraft, eines übertragenen Drucks und/oder eines übertragenen Drehmoments an dem aktiven Element vorgesehen ist.

Gemäß einem weiteren nicht erfindungsgemäßen Aspekt ist eine Vorrichtung und/oder ein Verfahren zur Visualisierung von Signalen einer Sensoreinrichtung bereitgestellt, die in einem kieferorthopädischen Bracket bzw. in einer festsitzenden kieferorthopädischen Apparatur gemäß der Erfindung oder einer bevorzugten Ausführungsform hiervon enthalten ist. Dementsprechend ist vorteilhaft möglich, die tatsächlich bei Anwendung der Brackets bzw. der festsitzenden kieferorthopädischen Apparatur auftretenden Kräfte, Drücke und/oder Drehmomente einem Kieferorthopäden während des Einsetzens in den Mundbereich eines Patienten zu ermöglichen.

Gemäß einem weiteren nicht erfindungsgemäßen Aspekt ist weiterhin eine Vorrichtung und/oder ein Verfahren zur numerischen Simulation der mechanischen Spannungen bzw. Kräfte im mechanischen System gebildet von Kiefer, Zähnen plus kieferorthopädischer Apparatur gemäß der Erfindung oder einer bevorzugten Ausführungsform hiervon, wobei die Simulation bevorzugt auf der Methode der finiten Elemente und/oder der Methode der finiten Differenzen, insbesondere unter Verwendung der kommerziellen Softwarepackete (wie ANSYS, FEMLAB, usw.) erfolgt. Die Vorrichtung zur numerischen Simulation ermöglicht bevorzugt die Berechnung einer zeitlichen Vorhersage über den Ablauf der kieferorthopädischen Behandlung, insbesondere über die ermittelten plastischen Kiefereigenschaften. Weiterhin bevorzugt ermittelt die Vorrichtung zur numerischen Simulation einen zeitlich definierten Handlungsplan aus einem vorgegebenen zeitlichen Ablauf.

Weitere Aufgaben, Vorteile und Merkmale der vorliegenden Erfindung werden aus der nachfolgenden, beispielhaften Beschreibung von bevorzugten Ausführungsformen der Erfindung mit Bezug auf die Abbildungen ersichtlichEs zeigt:
Abbildung 1 eine schematische Aufsicht eines Brackets gemäß einer bevorzugten Ausführungsform der Erfindung, das an einem Zahn befestigt ist;
Abbildung 2 einen Schnitt entlang Linie A-A in Fig. 1; und
Abbildung 3 eine schematische Ansicht einer festsitzenden kieferorthopädischen Apparatur gemäß einer bevorzugten Ausführungsform der Erfindung.

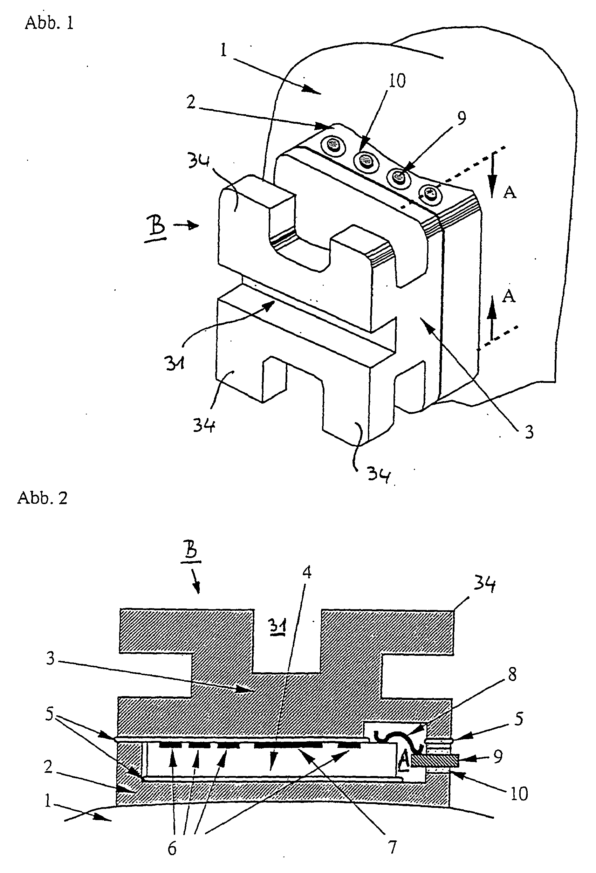

Nachfolgend wird eine bevorzugte Ausführungsform eines kieferorthopädischen Brackets B zur Verankerung einer festsitzenden kieferorthopädischen Apparatur mit Bezug auf Abbildungen 1 bis 3 beschrieben.

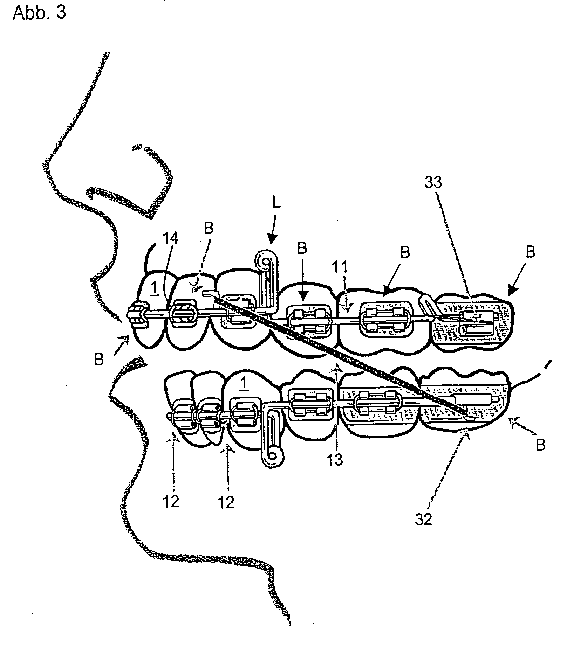

Eine in Abb. 3 gezeigte festsitzende kieferorthopädische Apparatur bzw. Multiband-bzw. Multibracketapparatur gemäß einer bevorzugten Ausführungsform der vorliegenden Erfindung weist eine Vielzahl von Brackets B auf, welche an einzelne Zähne 1 festgeklebt bzw. über Bänder festzementiert werden. Die Brackets dienen als eine Art Haltegriff und erlauben eine Übertragung von Kräften, Drücken und/oder Drehmomenten auf die einzelnen Zähne 1, bevorzugt in allen Raumrichtungen. Zu einer effizienten Bewegung der Zähne 1 kommt es vor allem dann, wenn die angewendeten Kräfte, Drücke und/oder Drehmomente richtig dimensioniert werden und für eine kontinuierliche Wirkung gesorgt wird. Die Kräfte, Drücke und/oder Drehmomente werden bevorzugt durch einen Bogen 11 auf die Bracket B und somit auf die Zähne 1 appliziert, wobei der Bogen 11 ein Segment- bzw. bogenförmiger Draht bevorzugt aus Metall mit rundem oder vierkantigem Querschnitt ist, der in eine Nut bzw. Schlitz bzw. Führungsrille 31 (sogenannte "slot") eingeführt wird. Alternativ bzw. zusätzlich kann der Bogen am Bracket B mittels eines Ligaturendrahtes 12, mittels eines rückstellfähigen Rings 14 (sogenannter "alastics") und/oder mittels eins am Bracket B befestigten beweglichen Elements (sog. "selbstligierende Brackets") befestigt werden. Weiterhin können Kräfte, Drücke und/oder Drehmomente über einen Bogen bzw. Gummiband 13 bzw. Gummiketten bzw. -federn bzw. intermaxilläre Verbindungseinheiten aufgebracht werden, die an bevorzugt hakenförmigen Festlegungen 32 am Bracket B angreift und sich bevorzugt zwischen der am Oberkiefer befestigten Teile der kieferorthopädischen Apparatur zu dem an dem Unterkiefer befestigten Teil der kieferorthopädischen Apparatur erstreckt. Weiterhin können Kräfte, Drücke und/oder Drehmomente über einen (nicht dargestellten) Gesichtsbogen (sogenannte "headgear") bzw. ähnlicher extraoraler Hilfsmittel aufgebracht werden, der an einem bevorzugt rohrförmigen Ansatz 33 des Brackets B angreift.

Nachfolgend wird mit Bezug auf Abbildungen 1 und 2 ein kieferorthopädisches Bracket bzw. Verankerung B gemäß einer bevorzugten Ausführungsform der Erfindung beschrieben. Das kieferorthopädische Bracket B umfaßt eine Bracketbasis 2, die an einem Zahn 1 mittels eines Klebstoffes und/oder eines (nicht dargestellten) Bandes fixiert wird. Weiterhin weist das Bracket B eine Bracketbefestigung bzw. -schloß 3 auf, welches bevorzugt eine Nut bzw. einen Schlitz bzw. Slot 31 zur Aufnahme des Bogens 11 dient. Erzeugt werden die auf dem Zahn 1 wirkenden Kräfte, Drücke und/oder Drehmomente bevorzugt durch einen unterschiedlichen Verlauf von Bracketslot 31 und Bogen 11 (vor Eingliederung des Bogens 11 in die Bracketslots 31) bevorzugt in allen drei Raumebenen. Die Abweichung zwischen Bracketslot 31 und Bogen 11 kommt dadurch zustande, daß einerseits bevorzugt sog. "Idealbögen" verwendet werden, die im wesentlichen planar ausgebildet sind und eine im wesentlichen gleichmäßige Bogenform, insbesondere ohne Knicke aufweisen, und daß andererseits die Brackets B zumeist in Idealposition am Zahn 1 befestigt werden, und somit die Bracketslots 31 der einzelnen Zähne 1 anfänglich nicht in einer Ebene liegen bzw. nicht relativ zueinander ausgerichtet sind. Darüber hinaus können vom Kieferorthopäden vorgenommene Biegungen im Bogen z.B. durch Schleifen (sogenannte "loops") L, Stufen und/oder Torquieren des Bogens 11 einen unterschiedlichen Verlauf von Bogen 11 und Bracketslot 31 und demzufolge eine Kraft, ein Druck und/oder ein Drehmoment erzeugen. Das Bracket B gemäß der bevorzugten Ausführungsform der Erfindung umfaßt weiterhin eine Sensoreinrichtung 4, welche sandwichartig zwischen der Bracketbasis 2 und der Bracketbefestigung 3 vorgesehen ist, so daß Kräfte, Drücke und/oder Drehmomente, die auf der Bracketbefestigung 3 wirken, über die Sensoreinrichtung 4 in die Bracketbasis 2 und auf den Zahn 1 übertragen werden. Bevorzugt ist die Sensoreinrichtung 4 mittels eines Klebstoffes 5 sowohl an die Bracketbefestigung 3 als auch an die Bracketbasis 2 befestigt. Die Sensoreinrichtung 4 ist bevorzugt in einer Ausnehmung bzw. Raum A untergebracht, die durch eine entsprechende Aushöhlung bzw. Rücksprung der Bracketbasis 2 und/oder der Bracketbefestigung 3 ausgebildet ist, wobei die Sensoreinrichtung 4 bevorzugt nach außen hin abgedichtet ist. Obwohl in Abbildung 2 die Bracketbasis 2 über einen entsprechenden Vorsprung unmittelbar an die Bracketbefestigung 3 mittels einer Klebung 5 befestigt ist, kann ebenfalls die Bracketbasis 2 ausschließlich über die Sensoreinrichtung 4 mit der Bracketbefestigung 3 befestigt sein. Dieser sandwichartige Aufbau von Bracketbasis 2, Sensorchip 4 und Bracketbefestigung 3 ermöglicht vorzugsweise eine genaue Erfassung der auf das Bracket B wirkenden Kräfte, Drücke und/oder Drehmomente. Die Sensoreinrichtung 4 ist derart mit der Bracketbasis 2 und der Bracketbefestigung 3 gekoppelt, das Scher- und/oder kompressive Kräfte, die auf das Bracket wirken, durch die Sensoreinrichtung 4 detektiert bzw. erfaßt bzw. gemessen werden können. Die Klebeschicht 5 ist zu diesem Zweck bevorzugt geeignet steif bzw. starr ausgebildet.

Darüber hinaus weist die Bracketbefestigung bzw. -schloß 3 einen oder mehrere Ligaturenflügel 34 zur Befestigung von zumindest einem Ligaturendraht 12 und/oder eines alastics 14 bzw. eines beweglichen Elements am Bracket B auf. Auch kann die Sensoreinrichtung 4 mittels eines Harzes bzw. Klebstoffs eingekapselt werden.

Das mit einer Sensoreinrichtung 4 versehene kieferorthopädische Bracket B sowie die ein solches Bracket B enthaltende kieferorthopädische Apparatur kann weiterhin zusammenwirken mit einer Vorrichtung zur Generierung und Aktualisierung eines Behandlungsplans, welche die durch das Bracket B gemessenen Kräfte, Drücke und/oder Drehmomente, bevorzugt in Kombination mit weiteren Daten (z.B. räumlicher Art) der Zähne 1 verwendet. Weiterhin ist es bevorzugt, daß die Kräfte, Drücke und/oder Drehmomente über einen Zeitraum hinweg gemessen werden, um deren zeitliche Entwicklung, insbesondere zwischen zwei Justierungen der kieferorthopädischen Apparatur zu erfassen. Daher ist es möglich, die unmittelbar nach einer Nachjustierung auf die Zähne 1 des Patienten wirkenden maximalen Kräfte, Drücke und/oder Drehmomente zu messen, und deren progressive Veränderung durch den progressiven Umbau des Kieferknochens und der sich daraus ergebenden Verschiebung/Drehung der Zähne 1 nachzuvollziehen. Daher ist mittels der Berechnungsvorrichtung eine Berechnung der maximalen Häufigkeit der Nachjustierungen möglich.

Weiterhin ist eine numerische Simulationsvorrichtung vorgeschlagen zur dreidimensionalen, bevorzugt zeitaufgelösten Berechnungen der plastischen Eigenschaften des Kiefers, insbesondere dessen effektiver Viskosität. Diese numerische Simulationsvorrichtung erfaßte die durch das Bracket B gemessenen Kräfte, Drücke und/oder Drehmomente und berechnet aus deren Abklingen und der erreichten VerschiebünglDrehungen die von Patient zu Patient verschiedenen Nachgiebigkeit, Anpassungsfähigkeit und/oder Plastizität des Kieferknochengerüsts bzw. -gewebes. Die numerische Simulation des mechanischen Systems gebildet aus Kiefer, Zähnen, Zahnhalteapparat und kieferorthopädischer Apparatur kann z.B. auf der Methode der finiten Elemente und/oder der finiten Differenzen erfolgen, insbesondere über die kommerziellen Softwarepakete wie ANSYS, FEMLAB u.a. Durch die Simulation der plastischen Kiefereigenschaften kann die numerische Simulationsvorrichtung somit eine zeitliche Vorhersage über den Ablauf der kieferorthopädischen Behandlung sowie auch ein zeitlich definierter Behandlungsplan aus einem vorgegebenen zeitlichen Ablauf errechnen.

Die Sensoreinrichtung 4 ist bevorzugt als Halbleitereinrichtung ausgestaltet, in die miniaturisierte Sensoren 6 (z.B. durch Diffusion und/oder Dotierung) integriert sind. Die Sensoren 6 können die auf sie wirkenden Kräfte, Drücke und/oder Drehmomente mittels eines elektromechanischen, piezoresistiven, piezoelektrischen, magnetostriktiven, magnetoelastischen und/oder Hall-Effekts erfassen, indem sie ein entsprechendes Signal erzeugen. Dies erfolgt bevorzugt in einem Dünnfilmsensor, einem Dickschichtsensor, einem Festkörpersensor, einem Dehnungsmeßstreifen, einem kapazitiven Sensor, und/oder einem integrierten/diskreten Halbleitersensor. Weiterhin bevorzugt umfaßt die Halbleitereinrichtung eine darin integrierte Schaltung 7, die die durch die Sensoreinheit(en) 6 erzeugten Signale über eine entsprechende Signalverbindung mit der Sensoreinheit 6 erhält und diese verarbeitet, bevorzugt verstärkt, zwischenspeichert, zumindest teilweise aufbereitet und/oder auswertet. Aufgrund der unmittelbaren Nähe der integrierten Schaltung 7 zu der Sensoreinheit bzw. zu den Sensoreinheiten 6 ist eine verlust- und rauscharme Signalerfassung bzw.- verarbeitung möglich. Die Sensoreinrichtung 4 umfaßt bevorzugt einen Temperatursensor 6, z.B. auf der Basis von integrierten Dioden, Transistoren und/oder von temperaturabhängigen Widerständen, die eine Messung der Temperatur des Brackets B ermöglicht, um gegebenenfalls eine Temperaturkompensation vorzunehmen. Weiterhin umfaßt die Sensoreinrichtung 4 bevorzugt eine Energiespeichereinrichtung, welche einen Akkumulator und/oder eine Batterie aufweist, um die entsprechenden Sensoreinheiten 6 und/oder die integrierte Schaltung 7 mit Energie bzw. Spannung zu versorgen. Dies ist besonders dann von Vorteil, wenn die Energie- und/oder Signal- bzw. Informationsaustausch im wesentlichen kontaktlos, z.B. mittels Induktion erfolgt. Die Signale der Sensoreinheit 6 bzw. der integrierten Schaltung 7 können über einen Bonddraht 8 und einem entsprechenden Kontakt 9 zu der Außenseite des Brackets B geleitet werden, so daß die Signale mittels eines entsprechenden orthodontischen Spezialinstruments mit entsprechenden Gegenkontakten und elektrischen Leitungen abgenommen bzw. abgelesen werden können. Sofern die Bracketbasis 2 elektrisch leitend ausgebildet ist, z.B. aus Metall, sind die Kontaktstellen 9 durch eine entsprechende Isolation 10 von der Bracketbasis 2 elektrisch isoliert. Obwohl die Kontakte bzw: Kontaktstifte 9 in Abbildungen 1 und 2 an der Bracketbasis 2 angeordnet sind, können dies zumindest teilweise auch an der Bracketbefestigung bzw. -schloß 3 vorgesehen sein.

Alternativ oder zusätzlich können die Signale auch über telemetrische Methoden nach außen gelangen. Zu diesem Zweck weist die Sensoreinrichtung 4 eine antennenartige Struktur auf, die zur Aussendung bzw. zum Empfang von entsprechenden elektromagnetischen Signalen ausgelegt ist. Ebenfalls kann die Versorgung mit Energie, sei es zur Aufladung eines entsprechenden Akkumulators innerhalb des Brackets B sei es zur vorübergehenden Versorgung der Sensoreinrichtung 4 mit Energie über bevorzugt kontaktlose elektromagnetische Induktion von außen erfolgen. Weiterhin bevorzugt ist die Sensoreinrichtung 4 mit einem digitalen Speicher zur Speicherung der von den Sensoreinheiten gemessenen Kräften, Drücken und/oder Drehmomenten, bevorzugt über einen längeren Zeitraum, versehen. Die Sensoreinrichtung 4 kann weiterhin bevorzugt eine Schaltung zur Kalibrierung und/oder Eichung der Sensoreinheiten 6 enthalten.

In einer alternativen Ausführungform wird das Bracket aus einem/mehereren Kunststoff(en) und/oder Kompositwerkstoff(en) durch Umhüllen (z.B. mittels Spritzguss) der Sensoreinheit oder durch schichtweisen Aufbau (wie in der Zahntechnik bekannt) und damit progressives Umhüllen hergestellt. Die Kontaktstellen, falls vorhanden, und/oder antennenartige Strukturen im Fall einer telemetrischen Übertragung der Signale werden bevorzugt ebenfalls eingehüllt.

Weiterhin können die von der Sensoreinrichtung 4 gemessenen Kräfte, Drücke und/oder Drehmomente mittels einer Speichereinrichtung patientenspezifisch gespeichert werden, so daß diese Daten in einer elektronischen Patientenakte ("electronic patient record") integriert werden kann.

Dementsprechend liefert das intelligente bzw.smarte Bracket B gemäß der bevorzugten Ausführungsform der Erfindung dem praktizierenden Kieferorthopäden sowie auch dem in der kieferorthopädischen Forschung und Entwicklung tätigen Wissenschaftler ein quantitatives Feedback über die in der festsitzenden kieferorthopädischen Apparatur (Multiband-/Multibracketsystem) wirkenden Kräfte, Drücke und/oder Drehmomente. Daher können die während der Aktivierung der Apparatur wirkenden Kräfte, Drücke und/oder Drehmomente bevorzugt laufend über eine entsprechend angepaßte Anzeigevorrichtung akustisch, optisch und/oder auf andere zweckmäßige Art mitgeteilt werden, so daß eine feinere, optimale Einstellung der Kräfte, Drücke und/oder Drehmomente durch den Kieferorthopäden vorgenommen werden kann. Darüber hinaus wird der Kieferorthopäde in die Lage versetzt, die von ihm eingestellten Kräfte dem einzelnen Patienten konkret anzupassen, z.B. eine Reduzierung der Kräfte bei vorgeschädigten Zahnhalteapparat zu berücksichtigen. Darüber hinaus kann die Deaktivierung bzw. Abnahme der Kräfte, Drücke und/oder der Drehmomente im Zuge der Zahnbewegung von Sitzung zu Sitzung überwacht werden, so daß der optimale Zeitpunkt der Nachaktivierung zuverlässiger abgeschätzt werden kann. Darüber hinaus wird durch die quantitative Beurteilung der applizierten Kräfte, Drücke und/oder Drehmomente auch die Gefahr einer traumatisierenden Wirkung auf das Paradont wesentlich verringert.

Die Bracketbasis 2 ist bevorzugt mit einer Retentionsstruktur auf der dem Zahn 1 zugewandten Seite versehen, so daß eine bessere Verbindung zwischen Bracketbasis 2 und Zahn 1 erzielt werden kann. Die Retentionsstruktur weist bevorzugt eine Aufrauhung der Oberfläche und/oder Vorsprünge bzw. Rücksprünge auf, die sowohl regelmäßig als auch unregelmäßig aufgebracht sein können. Die Bracketbasis 2 und/oder die Bracketbefestigung bzw. -schloß 3 sind aus Metall und/oder Kunststoff bzw. Keramik gefertigt.

Obwohl die festsitzende kieferorthopädische Apparatur in Abbildung 3 als Labialapparatur dargestellt ist, kann die Erfindung ebenfalls auf Lingualapparaturen bzw. Lingualbrackets angewendet werden.

Weiterhin ist gemäß einer nicht dargestellten Ausführungsform, welche nicht Gegenstand der vorliegenden Erfindung ist, eine abnehmbare kieferorthopädische Apparatur (z.B. eine aktive Platte mit einer Dehnschraube als ein aktives Element, eine Doppelvorschubplatte, eine funktionskieferorthopädische Apparatur bzw. ein Aktivator o.ä.) bereitgestellt.

Eine bevorzugt als aktive Platte (sog. "Zahnspange") ausgestaltete abnehmbare kieferorthopädische Apparatur ist aus dem Mundraum herausnehmbar und ist aus Kunststoff, Metalldrähten und Schrauben (beispielsweise Dehn- und/oder Zugschrauben als bevorzugte aktive Elemente) hergestellt, wobei einige Metalldrähte gebogen sind und als Halteelemente dienen, die die Apparatur an den Zähnen 1 festhalten. Die aktive Platte weist weitere aktive Elemente (sog. Bewegungselemente) - wie Federn und Bügel - auf, welche beim Einsetzen der Apparatur aktiviert werden, um Kräfte, Drücke und/oder Drehmomente auf die Zähne 1 aufzubringen, um diese wie gewünscht zu bewegen bzw. zu versetzen. Die aktive Platte weist zumindest eine Sensoreinrichtung auf, um die durch die aktiven Elemente auf den Zahn 1 bzw. die Zahngruppe bzw. den gesamten Kiefer aufgebrachten bzw. übertragenen Kräfte, Drücke und/oder Drehmomente zu erfassen bzw. zu messen. Die Sensoreinrichtung kann hierbei auf der Verbindungsseite zwischen aktivem Element und Zahn 1 und/oder auf der Seite zwischen aktivem Element und z.B. einer Gaumenplatte der aktiven Platte (z.B. aus Kunststoff) angeordnet sein.

Weiterhin ist eine Vorschubdoppelplatte bzw. Doppelvorschubplatte als eine bevorzugte herausnehmbare kieferorthopädische Apparatur bereitgestellt, welche bevorzugt zur Einstellung der sagittalen Rücklage des Unterkiefers und der transversalen Dehnung (Verbreiterung) des Unter- und des Oberkiefers eingesetzt wird.

Die Vorschubdoppelplatte weist zwei getrennte, herausnehmbare Platten für jeweils den Unter- und Oberkiefer auf. Beide Geräte sind durch Protrusionsstege vom Oberkiefer miteinander verbunden. Die Unterkiefer-Platte enthalt eine schiefe Ebene, die in einem Winkel z.B. von ca. 60 Grad zur Okklusionsebene hergestellt wird. Zur Vermeidung von Reibung zwischen den Stegen und der schiefen Ebene ist die schiefe Ebene bevorzugt gut poliert und völlig plan gestaltet. Zur Erleichterung dieser Forderung kann eine spezielle Schraube als ein aktives Element mit einem Kunstoffhalter vorgesehen werden. Die Oberkiefer-Platte mit den Protrusionsstegen dient als Führung des Unterkiefers und sollte daher gut polierte und parallel stehende Stege aufweisen. Bevorzugt ist eine Dehnschraube mit aufgelaserten Protrusionsstegen als ein aktives Element vorgesehen. Die bevorzugte Vorschubdoppelplatte weist zumindest eine Sensoreinrichtung auf, welche die durch die künstliche Vor- oder Rückverlagerung des Unterkiefers und/oder durch die Schraube als ein aktives Element erzeugten Kräfte, Drücke und/oder Drehmomente, insbesondere für einen gewünschten Vorschub des Unterkiefers erfaßt bzw. detektiert. Bevorzugt ist die Sensoreinrichtung unmittelbar an der Schraube angeordnet.

Weiterhin ist ein funktionskieferorthopädisches Gerät bzw. Gebißregler als eine bevorzugte herausnehmbare kieferorthopädische Apparatur bereitgestellt, welches auf beide Kiefer gemeinsam wirkt, den Biss korrigiert und das Zusammenbeißen der Zähne (sog. "Verzahnung") sowie die Relation von Ober- und Unterkiefer (sog. "Kieferrelation") verbessert. Funktionskieferorthopädische Apparaturen sind mehr oder weniger starre Apparaturen, die bevorzugt aus Kunststoff und Drahtelementen gefertigt sind. Sie weisen bevorzugt keine Halteelemente an den Zähnen 1 auf. Es gibt verschiedene Arten von funktionskieferorthopädischen Apparaturen mit ähnlichem Wirkungsprinzip aber sehr unterschiedlichen Konstruktionsprinzipien, z.B. folgende: Aktivator nach Andresen und Häupl, Bionator nach Balters, Gebißformer nach Bimler, Elastisch-offener Aktivator nach Klammt, Kinetor nach Stockfisch, Funktionsregler nach Fränkel, Kybemetor, skelettierter Aktivator, Funktionator (FIO), Twin Block-Apparatur, Züricher Aktivator nach Teuscher, Berliner Aktivator und andere.

Den angegebenen funktionskieferorthopädischen Apparaturen gemeinsam ist, daß sie nur die auf das Kauorgan einwirkenden funktionellen Einflüsse auf Zähne und Kieferteile übertragen, wobei sie die Ruhelage des Unterkiefers durch Änderung des Ruhetonus der die Unterkieferposition bestimmenden Muskeln günstig beeinflussen und/oder die beim Zubeißen entstehenden vertikalen Kräfte in mehr horizontale ändern und/oder den durch die Zunge und Lippen auf die Zähne und/oder Kiefer ausgeübten Drücke beeinflussen. Die entstehenden Kräfte, Drükke und/oder Drehmomente werden geeignet durch zumindest eine an bzw. in der funktionskieferorthopädischen Apparatur vorgesehene Sensoreinrichtung detektiert bzw. erfaßt. Die funktionskieferorthopädische Apparatur aktiviert somit die von Lippen-, Wangen- und/oder Kaumuskulatur ausgehenden körpereigenen Kräfte, die mittelbar/unmittelbar durch die Sensoreinrichtung gemessen werden, und bewegt so die Zähne bevorzugt während des Zahnwechsels und steuert vor allem die Wachstumsvorgänge in der Hauptwachstumsphase. Daher wird diese Art von Behandlungsgerät auch "Aktivator" genannt. Dadurch, daß das funktionskieferorthopädische Gerät beim Zusammenbeißen und Schlucken die Muskulatur in eine bestimmte Position führt und hält, werden die Kau- und Muskelkräfte permanent ausgenutzt und umgelenkt und somit die Korrektur der Stellung von Ober- und Unterkiefer zueinandergefördert.

### Bezugszeichenliste

- 1: Zahn
- 2: Bracketbasis
- 3: Bracketbefestigung bzw.-schloß
- 4: Sensoreinheit bzw. Sensorchip
- 5: Klebstoff
- 6: Sensoreinheit(en) bzw. Sensor(en)
- 7: integrierte Schaltung
- 8: Bonddraht
- 9: Kontaktstift
- 10: Isolation
- 11: Bogen
- 12: Ligaturen
- 13: Bogen/Gummi bzw. Gummiband
- 14: Alastics bzw. Gummiring
- 31: Nut bzw. Schlitz bzw. Slot
- 32: Haken für Bogen
- 33: Headgear-Röhrchen
- 34: Ligaturenflügel
- B: Bracket
- L: Loop

## Patentansprüche

1. Kieferorthopädisches Bracket (B) zur Verankerung einer festsitzenden kieferorthopädischen Apparatur an einem Zahn (1), mit
einer an einem Zahn (1) zu verankernden Bracketbasis (2) und
einer Bracketbefestigung (3) zur Befestigung einer Kraft-, Druck- und/oder Drehmomentaufbringungseinrichtung (11; 13),
wobei zumindest eine Sensoreinrichtung (4) zwischen der Bracketbasis (2) und der Bracketbefestigung (3) zur Messung einer von der Bracketbefestigung (3) auf die Bracketbasis (2) übertragene Kraft, eines übertragenen Drucks und/oder eines übertragenen Drehmoments vorgesehen ist.

2. Kieferorthopädisches Bracket nach Anspruch 1, wobei die Sensoreinrichtung (4) die übertragene Kraft, den übertragenen Druck und/oder das übertragene Drehmoment mittels eines durch die Kraft, den Druck bzw. das Drehmoment erzeugten elektromechanischen, kapazitiven, piezoresistiven, piezoelektrischen, magnetostriktiven, magnetoelastischen und/oder Hall-Effekts, mittels eines Dünnfilmsensors, eines Dickschichtsensors, eines integrierten Sensors, eines kapazitiven Sensors eines Dehnmeßstreifens und/oder mittels einer mikromechanisch gefertigten Sensors detektiert.

3. Kieferorthopädisches Bracket nach einem der vorangehenden Ansprüche, wobei die Sensoreinrichtung (4) eine Halbleitereinrichtung (4) aufweist, in bzw. auf der zumindest eine Sensoreinheit (6) integriert ist.

4. Kieferorthopädisches Bracket nach Anspruch 3, wobei die Halbleitereinrichtung (4) eine darin integrierte Schaltung (7) aufweist, die mit der Sensoreinheit (6) signalverbunden ist und ein Signal der Sensoreinheit (6) verarbeitet.

5. Kieferorthopädisches Bracket nach einem der vorangehenden Ansprüche, wobei ein durch die Sensoreinrichtung (4) erzeugtes Signal über eine Kontakteinrichtung (8; 9) von außen ablesbar ist.

6. Kieferorthopädisches Bracket nach einem der vorangehenden Ansprüche, wobei die Sensoreinrichtung (4) mit der Bracketbasis (2) und/oder der Bracketbefestigung (3) über eine Klebeschicht (5) befestigt ist.

7. Kieferorthopädisches Bracket nach einem der vorangehenden Ansprüche, wobei die Bracketbasis (2) und/oder die Bracketbefestigung (3) eine Ausnehmung (A) definiert bzw. definieren, in der die Sensoreinrichtung (4) aufgenommen ist.

8. Kieferorthopädisches Bracket nach Anspruch 7, wobei die Sensoreinrichtung (4) in der Ausnehmung (A) eingekapselt ist.

9. Kieferorthopädisches Bracket nach einem der vorangehenden Ansprüche, wobei die Bracketbasis (2) zur Befestigung an dem Zahn (1) eine strukturierte Fläche aufweist.

10. Kieferorthopädisches Bracket nach einem der vorangehenden Ansprüche, wobei die Bracketbefestigung (3) zumindest eine Nut (31) aufweist, in der ein Bogen als Kraft-, Druck- und/oder Drehmomentaufbringungseinrichtung (11; 13) einer festsitzenden kieferorthopädischen Apparatur einführbar ist, um eine Kraft, einen Druck und/oder ein Drehmoment auf den Zahn (1) zu übertragen.

11. Kieferorthopädisches Bracket nach einem der vorangehenden Ansprüche, wobei die Bracketbefestigung (3) eine Befestigungseinrichtung zum Befestigen eines Bandes, bevorzugt eines Gummizuges, und/oder eines Gesichtsbogens als Kraft-, Druck- und/oder Drehmomentaufbringungseinrichtung (11; 13) einer festsitzenden kieferorthopädischen Apparatur aufweist, um eine Kraft, einen Druck und/oder ein Drehmoment auf den Zahn (1) übertragen zu können.

12. Kieferorthopädisches Bracket nach einem der vorangehenden Ansprüche, wobei ein Temperatursensor zur Messung der Temperatur, bevorzugt in die Sensoreinrichtung (4) integriert, vorgesehen ist.

13. Kieferorthopädisches Bracket nach einem der vorangehenden Ansprüche, welches zumindest teilweise aus einem oder mehreren Kunststoffen und/oder einem oder mehreren Kompositwerkstoffen ausgebildet ist.

14. Festsitzende kieferorthopädische Apparatur zur festen Anbringung an Zähnen (1), welche eine Vielzahl von an Zähnen (1) anzubringender Brackets (B) aufweist, auf die mittels einer Aufbringeinrichtung (11; 13) eine Kraft, ein Druck und/oder ein Drehmoment aufgebracht werden soll, wobei zumindest ein Brakket (B) nach einem der vorangehenden Ansprüche ausgebildet ist.

15. Festsitzende kieferorthopädische Apparatur gemäß Anspruch 14, welche einen Bogen (11) als Kraft-, Druck- und/oder Drehmomentaufbringungseinrichtung (11; 13) aufweist.

## Claims

1. Orthodontic bracket (B) for anchoring a tight-fitting orthodontic appliance to a tooth (1), with a bracket base (2) to be anchored to a tooth (1) and
a bracket attachment (3) for securing a force, pressure and/or torque application device (11; 13),
at least one sensor device (4) being provided between the bracket base (2) and the bracket attachment (3) for the purpose of measuring a force transmitted from the bracket attachment (3) to the bracket base (2), a transmitted pressure and/or a transmitted torque.

2. Orthodontic bracket according to Claim 1, in which the sensor device (4) detects the transmitted force, the transmitted pressure and/or the transmitted torque by means of an electromechanical, capacitive, piezoresistive, piezoelectric, magnetostrictive, magnetoelastic and/or Hall effect generated by the force, the pressure and the torque, by means of a thin-film sensor, a thick-film sensor, an integrated sensor, a capacitive sensor, a strain gauge and/or by means of a sensor produced by micromechanics.

3. Orthodontic bracket according to one of the preceding claims, in which the sensor device (4) comprises a semiconductor device (4) in or on which at least one sensor unit (6) is integrated.

4. Orthodontic bracket according to Claim 3, in which the semiconductor device (4) comprises a circuit (7) which is integrated therein and which is signal-connected to the sensor unit (6) and processes a signal of the sensor unit (6).

5. Orthodontic bracket according to one of the preceding claims, in which a signal generated by the sensor device (4) can be read off from outside via a contact device (8; 9).

6. Orthodontic bracket according to one of the preceding claims, in which the sensor device (4) is secured to the bracket base (2) and/or to the bracket attachment (3) via an adhesive layer (5).

7. Orthodontic bracket according to one of the preceding claims, in which the bracket base (2) and/or the bracket attachment (3) define(s) a recess (A) in which the sensor device (4) is received.

8. Orthodontic bracket according to Claim 7, in which the sensor device (4) is encapsulated in the recess (A).

9. Orthodontic bracket according to one of the preceding claims, in which the bracket base (2) to be secured to the tooth (1) has a structured surface.

10. Orthodontic bracket according to one of the preceding claims, in which the bracket attachment (3) has at least one groove (31) in which an arch can be inserted as the force, pressure and/or torque application device (11; 13) of a tight-fitting orthodontic appliance, in order to transmit a force, a pressure and/or a torque to the tooth (1).

11. Orthodontic bracket according to one of the preceding claims, in which the bracket attachment (3) has a securing device for securing a band, preferably a rubber band, and/or a facebow as the force, pressure and/or torque application device (11; 13) of a tight-fitting orthodontic appliance, in order to be able to transmit a force, a pressure and/or a torque to the tooth (1).

12. Orthodontic bracket according to one of the preceding claims, in which a temperature sensor is provided for measuring the temperature and is preferably integrated into the sensor device (4).

13. Orthodontic bracket according to one of the preceding claims, which orthodontic bracket is made at least partially of one or more plastics and/or of one or more composite materials.

14. Tight-fitting orthodontic appliance for fixed application to teeth (1), having a multiplicity of brackets (B) which are to be placed on teeth (1) and to which a force, a pressure and/or a torque is to be applied by means of an application device (11; 13), at least one bracket (B) being designed according to one of the preceding claims.

15. Tight-fitting orthodontic appliance according to Claim 14, which comprises an arch (11) as the force, pressure and/or torque application device (11; 13).

## Revendications

1. Support orthodontique (B) pour ancrer un appareillage orthodontique fixe sur une dent (1), comprenant :
- une base de support (2) devant être ancrée sur une dent (1) ; et
- une fixation de support (3) pour fixer un dispositif d'application de force, de pression et/ou de couple de rotation (11 ; 13),
dans lequel au moins un dispositif à capteur (4) est prévu entre la base de support (2) et la fixation de support (3) pour mesurer une force transmise, une pression transmise et/ou un couple de rotation transmis par la fixation de support (3) sur la base de support (2).

2. Support orthodontique selon la revendication 1, dans lequel le dispositif à capteur (4) détecte la force transmise, la pression transmise et/ou le couple de rotation transmis au moyen d'un effet électromécanique, capacitif, piézorésistif, piézoélectrique, magnétostrictif, magnéto-élastique et/ou d'un effet de Hall généré par la force, la pression et/ou le couple de rotation, au moyen d'un capteur à couche mince, d'un capteur à couche épaisse, d'un capteur intégré, d'un capteur capacitif, d'un extensomètre à résistance et/ou au moyen d'un capteur fabriqué de manière micromécanique.

3. Support orthodontique selon l'une des revendications précédentes, dans lequel le dispositif à capteur (4) présente un dispositif à semi-conducteurs (4) dans lequel ou sur lequel est intégrée au moins une unité de capteur (6).

4. Support orthodontique selon la revendication 3, dans lequel le dispositif à semi-conducteurs (4) présente un circuit intégré dedans (7) qui est relié par signal avec l'unité de capteur (6) et qui traite un signal de l'unité de capteur (6).

5. Support orthodontique selon l'une des revendications précédentes, dans lequel un signal généré par le dispositif à capteur (4) peut être lu de l'extérieur par l'intermédiaire d'un dispositif à contact (8 ; 9).

6. Support orthodontique selon l'une des revendications précédentes, dans lequel le dispositif à capteur (4) est fixé avec la base de support (2) et/ou la fixation de support (3) par l'intermédiaire d'une couche de colle (5).

7. Support orthodontique selon l'une des revendications précédentes, dans lequel la base de support (2) et/ou la fixation de support (3) définit ou définissent un creux (A)
dans lequel le dispositif à capteur (4) vient se loger.

8. Support orthodontique selon la revendication 7, dans lequel le dispositif à capteur (4) est encapsulé dans le creux (A).

9. Support orthodontique selon l'une des revendications précédentes, dans lequel la base de support (2) présente une surface structurée pour la fixation sur la dent (1).

10. Support orthodontique selon l'une des revendications précédentes, dans lequel la fixation de support (3) présente au moins une rainure (31) dans laquelle il est possible d'introduire un arc comme dispositif d'application de force, de pression et/ou de couple de rotation (11 ; 13) d'un appareillage orthodontique fixe afin de transmettre une force, une pression et/ou un couple de rotation sur la dent (1).

11. Support orthodontique selon l'une des revendications précédentes, dans lequel la fixation de support (3) présente un dispositif de fixation pour fixer une bande, de préférence un tirant en caoutchouc, et/ou un arc facial comme dispositif d'application de force, de pression et/ou de couple de rotation (11 ; 13) d'un appareillage orthodontique fixe afin de pouvoir transmettre une force, une pression et/ou un couple de rotation sur la dent (1).

12. Support orthodontique selon l'une des revendications précédentes, dans lequel un capteur de température qui est de préférence intégré dans le dispositif à capteur (4) est prévu pour mesurer la température.

13. Support orthodontique selon l'une des revendications précédentes, lequel est réalisé au moins partiellement à partir d'une ou de plusieurs matières plastiques et/ou d'un ou de plusieurs matériaux composites.

14. Appareillage orthodontique fixe pour le montage stationnaire sur des dents (1), lequel présente une pluralité de supports (B) devant montés sur des dents (1) et sur lesquels une force, une pression et/ou un couple de rotation doit/doivent être appliqué(e)(s) au moyen d'un dispositif d'application (11 ; 13), dans lequel au moins un support (B) est réalisé selon l'une des revendications précédentes.

15. Appareillage orthodontique fixe selon la revendication 14, lequel présente un arc (11) comme dispositif d'application de force, de pression et/ou de couple de rotation (11 ; 13).
